(19) Europäisches Patentamt European Patent Office Office européen des brevets

(11) **EP 4 510 321 A1**

(12) **EUROPEAN PATENT APPLICATION**

(43) Date of publication:
**19.02.2025 Bulletin 2025/08**

(21) Application number: **24166418.4**

(22) Date of filing: **26.03.2024**

(51) International Patent Classification (IPC):
$H01M\ 50/107^{(2021.01)}$     $H01M\ 50/133^{(2021.01)}$
$H01M\ 50/143^{(2021.01)}$     $H01M\ 50/179^{(2021.01)}$
$H01M\ 50/188^{(2021.01)}$     $H01M\ 50/342^{(2021.01)}$
$H01M\ 50/559^{(2021.01)}$

(52) Cooperative Patent Classification (CPC):
H01M 50/107; H01M 50/133; H01M 50/143;
H01M 50/179; H01M 50/188; H01M 50/3425;
H01M 50/559; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.07.2023 CN 202321977814 U**

(71) Applicant: **Eve Energy Co., Ltd.
Huizhou, Guangdong 516006 (CN)**

(72) Inventors:
• **FAN, Chengwei
Guangdong, 516006 (CN)**

• YAO, Wenjie
  Guangdong, 516006 (CN)
• FENG, Biao
  Guangdong, 516006 (CN)
• LI, Guiping
  Guangdong, 516006 (CN)
• LI, Mujian
  Guangdong, 516006 (CN)
• BU, Fang
  Guangdong, 516006 (CN)

(74) Representative: **Murgitroyd & Company
165-169 Scotland Street
Glasgow G5 8PL (GB)**

(54) **EXPLOSION-PROOF BATTERY**

(57) A battery includes a jelly roll and a case. The case includes a first shell and a second shell; the first shell has an accommodation cavity therein, the first shell is provided with an opening communicated with the accommodation cavity, the jelly roll is disposed in the accommodation cavity, and the second shell blocks the opening. An explosion-proof score is provided in the first shell and/or the second shell. A burst pressure of the explosion-proof score is P, a tensile strength of a material of the case is $\sigma_b$, a diameter of the first shell (2) is D, a wall thickness of the case is H, and a depth of the explosion-proof score (211) is h. In a case where the explosion-proof score is linear,

$$P = \frac{(H-h)\ \sigma_b}{D - 0.6(H-h)}$$

; or in a case where the explosion-proof score is curved

$$P = \frac{2(H-h)\ \sigma_b}{D - 1.2(H-h)}$$

.

FIG. 1

## Description

TECHNICAL FIELD

The present application relates to the field of power supply devices, and in particular to a battery.

BACKGROUND

Batteries are widely used in many fields, and demands for battery safety are getting higher and higher. When a battery is at high temperature, overcharged or short-circuited, a large amount of gas will be generated inside the battery, which will cause the pressure inside the battery case to rise sharply. In order to prevent batteries from exploding, explosion-proof structures are usually provided on the battery cases, and thus the gas inside the batteries may be exhausted through the explosion-proof structures to release the pressure.

In the related art, there are mainly two types of explosion-proof structures provided on the battery cases. The first type adopts a pressure-relief through hole provided in the case, and a bursting disc covering the pressure-relief through hole as an explosion-proof valve. The second type has the case scored to form an explosion-proof score in the case. The two type of structures in the related art have following defects. In the first structure, a gap exists between the bursting disc and the pressure-relief through hole, which affects the sealing of the battery. In the second structure, the explosion-proof score is generally scored according to operators' experience, and explosion-proof score with too large or insufficient depth is possibly formed. In the case where the depth of the explosion-proof score is too large, an extremely thin portion of the case is resulted, and the portion is easily cracked to cause liquid leakage in service of the battery. In the case where the depth of the explosion-proof score is insufficient, the pressure cannot reach the burst pressure of the explosion-proof score, and thus the air cannot burst through the explosion-proof score for exhausting. As a result, the explosion-proof score cannot play the role of explosion-proof.

SUMMARY OF THE INVENTION

The present application provides a battery to solve the technical problems above.

The present application provides a battery including a jelly roll and a case. The case includes a first shell and a second shell; the first shell has an accommodation cavity therein, the first shell is provided with an opening communicated with the accommodation cavity, the jelly roll is disposed in the accommodation cavity, and the second shell blocks the opening. An explosion-proof score is provided in the first shell and/or the second shell. A burst pressure of the explosion-proof score is P, a tensile strength of a material of the case is $\sigma_b$, a diameter of the first shell is D, a wall thickness of the case is H, and a depth of the explosion-proof score is h. When the

$$P = \frac{(H-h)\ \sigma_b}{D-0.6(H-h)}\ ;$$

explosion-proof score is linear, or, when the explosion-proof score is curved, $P =$

$$\frac{2(H-h)\ \sigma_b}{D-1.2(H-h)}.$$

Beneficial effects of the present application are as follows. For the battery provided in the present application, the explosion-proof score is provided in the case, and the explosion-proof score 211 is equivalent to a locally thinned portion provided on the case and may be used for gas exhausting and pressure relief when the pressure inside the case is too high, to avoid the battery from exploding, so that the battery has a relatively high safety, and there is no need to provide a through hole for installing an explosion-proof valve on the case. As a result, the sealing of the battery is improved. In case where the diameter of the case (first shell) is D, the wall thickness of the case is H, and the burst pressure of the battery is P, the explosion-proof score is designed according to the shape of the explosion-proof score on the basis of $P = \frac{(H-h)\ \sigma_b}{D-0.6(H-h)}$ in the case where the explosion-proof score is linear, and on the basis of

$P = \frac{2(H-h)\ \sigma_b}{D-1.2(H-h)}$ in the case where the explosion-proof score is curved, thereby the explosion-proof score is made with a suitable depth h, which may ensure the effectiveness of the case in an assembly process of the battery, and improve the sealing and safety of the battery.

BRIEF DESCRIPTION OF THE DRAWINGS

FIG. 1 is a cross-sectional view of a battery provided in some embodiments of the present disclosure;
FIG. 2 is a cross-sectional view of a first shell provided in some embodiments of the present disclosure;
FIG. 3 is a schematic structural diagram of a base plate provided in some embodiments of the present disclosure;
FIG. 4 is a partial cross-sectional view of a base plate provided in some embodiments of the present disclosure;
FIG. 5 is another structural schematic diagram of a base plate provided in some embodiments of the present disclosure;
FIG. 6 is yet another schematic structural diagram of a base plate provided in some embodiments of the present disclosure;
FIG. 7 is another partial cross-sectional view of a base plate provided in some embodiments of the present disclosure;

FIG. 8 is a schematic exploded view showing a second shell, a pole and a sealing member provided in some embodiments of the present disclosure;

FIG. 9 is a schematic diagram showing a cooperation between a second shell and a sealing member (the sealing member is not compressed) provided in some embodiments of the present disclosure;

FIG. 10 is a schematic diagram showing a cooperation between a second shell, a pole and a sealing member provided in some embodiments of the present disclosure;

FIG. 11 is another schematic diagram showing a cooperation between a second shell, a pole and a sealing member provided in some embodiments of the present disclosure.

List of the reference signs:

1. jelly roll; 11. first tab; 12. second tab; 2. first shell; 21. base plate; 211. explosion-proof score; 2111. score groove; 2111a. first score groove; 2111b. second score groove; 2111c. third score groove; 2112. first sloped surface; 22. first enclosing plate; 221. flared portion; 23. accommodation cavity; 3. second shell; 31. plate body; 311. first mounting hole; 312. limiting groove; 313. projecting portion; 32. bended structure; 321. first bended portion; 322. second bended portion; 4. fixing block; 41. second mounting hole; 411. second sloped surface; 42. third step surface; 43. first body; 44. first projecting ring; 5. pole; 51. first step surface; 52. second step surface; 53. second body; 54. second projecting ring; 55. third projecting ring; 6. sealing member; 61. first sealing portion; 62. second sealing portion; 63. third sealing portion; 64. first extension portion; 65. second extension portion; 7. insulating sheet.

## DETAILED DESCRIPTION OF THE PREFERRED EMBODIMENTS

In the description of the present application, unless otherwise clearly specified and limited, terms "connected", "connect" and "fix" should be understood in a generalized manner, for example, may be understood as fixed connection, detachable connection, or integration; or may be understood as mechanical connection or electrical connection; or may also be a direct connection or an indirect connection by means of a medium, or internal communication of two elements or a mutual relationship between two elements. A person of ordinary skill in the art can understand specific meanings of the foregoing terms in the present application according to a specific situation.

In the present application, unless otherwise clearly specified and limited, a first feature being "above" or "below" a second feature may include that the first feature directly contacts the second feature, and may also include that the first feature does not directly contact with the second feature but contacts the second feature through additional feature between the first feature and the second feature. Moreover, the first feature being "above", "on", and "on top of" the second feature includes the first feature being directly above and diagonally above the second feature, or indicates that a horizontal height of the first feature is higher than a horizontal height of the second feature. The first feature being "below", "under", and "beneath" the second feature includes the first feature being directly below and diagonally below the second feature, or indicates that a horizontal height of the first feature is lower than a horizontal height of the second feature.

In the description of the embodiments, orientations or positional relationships indicated by terms "up", "down", "right", etc. are based on the orientations or position relationships shown in the accompanying drawings, and are only for the convenience of describing the embodiments and simplifying the description, rather than implying or indicating that the device or the component referred to must have a particular orientation or constructed and operated in a particular orientation, and thus these terms cannot be understood as limiting the present application. In addition, terms "first" and "second" are only used for distinguishing in description and have no special meaning.

Some embodiments of the present disclosure provide a battery, the battery has a relatively simple structure, high sealing performance and high safety. The battery may be a cylindrical battery, a prismatic battery, a triangular prism battery, a special-shaped battery, or any one of variously shaped batteries. For clear description, specific embodiments of the cylindrical battery are described in detail below.

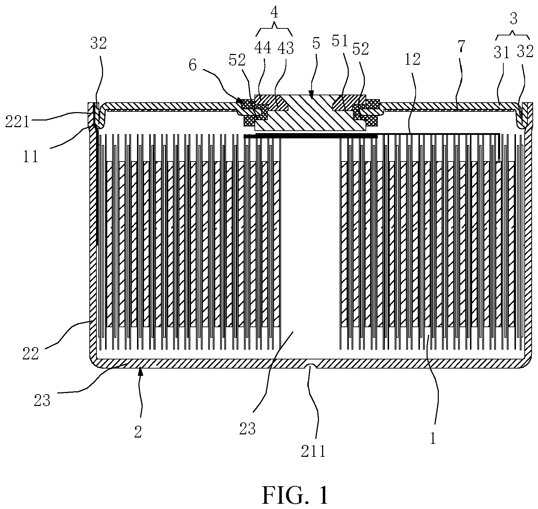

As shown in FIGS. 1 to 4, the battery includes a jelly roll 1 and a case. The case includes a first shell 2 and a second shell 3. The first shell 2 has an accommodation cavity 23, and the first shell 2 is provided with an opening communicated with the accommodation cavity 23. The jelly roll 1 is disposed in the accommodation cavity, and the second shell 3 blocks the opening. An explosion-proof score 211 is provided in the first shell 2 and/or the second shell 3. A burst pressure of the explosion-proof score 211 is P, a tensile strength of a material of the case is $\sigma_b$, a diameter of the first shell 2 is D, a wall thickness of the case is H, and a depth of the explosion-proof score 211 is h. In the case where the explosion-proof score is linear,

$$P = \frac{(H-h)\ \sigma_b}{D - 0.6(H-h)}$$

; or in the case where the explosion-proof score is curved,

$$P = \frac{2(H-h)\ \sigma_b}{D - 1.2(H-h)}$$

.

For the battery provided in the embodiments of the present disclosure, the explosion-proof score 211 is provided in the case, and the explosion-proof score 211 is equivalent to a locally thinned portion provided on the case and may be used for gas exhausting and pressure relief when pressure inside the case is too high to avoid the battery from exploding, so that the battery has a relatively high safety, and there is no need to provide a through hole for installing an explosion-proof valve on the case. As a result, the sealing of the battery is improved. When the diameter D of the case (first case), the wall thickness H of the case, and the burst pressure P of the battery are set, the explosion-proof score 211 of the battery is designed according to the shape of the explosion-proof score 211 on the basis of the formula

$$P = \frac{(H-h)\ \sigma_b}{D-0.6(H-h)}$$

in the case where the explosion-proof score is linear, and on the basis of the formula

$$P = \frac{2(H-h)\ \sigma_b}{D-1.2(H-h)}$$

in the case where the explosion-proof score is curved, thereby the explosion-proof score 211 is made with a suitable depth h, ensuring the effectiveness of the case in an assembly process of the battery, and improving the sealing and safety of the battery.

Optionally, the explosion-proof score 211 may be made by mechanical turning, laser engraving, chemical etching, die stamping, etc.

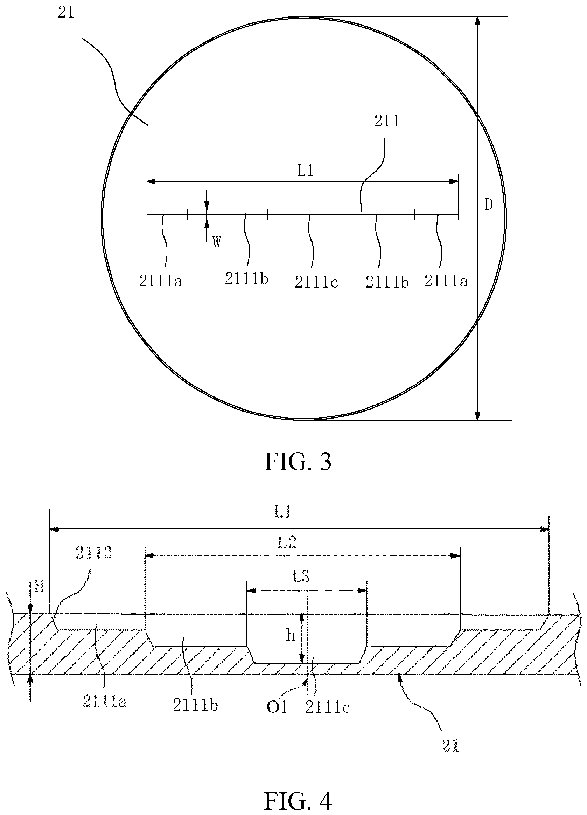

Specifically, as shown in FIGS. 3 and 4, the explosion-proof score 211 includes at least two score grooves 2111. All score grooves 2111 are arranged in steps along a depth direction of the explosion-proof score 211. A sum of depths of all score grooves 2111 is equal to the depth h of the explosion-proof score 211. It will be understood that, the explosion-proof score 211 may be a score with steps having different depths, which reduces the difficulty of etching the explosion-proof score 211 in the case. Different score grooves are located in different depths of the explosion-proof score 211, which may reduce the probability of liquid leakage caused by the portion of the case corresponding to the score being easily damaged due to assembly. As a result, the sealing of the battery is improved.

Specifically, as shown in FIG. 4, in the depth direction of the explosion-proof score 211, a difference between depths of any two score grooves 2111 is Δh, and Δh is in a range of -0.02 mm to 0.01 mm (-0.02 mm ≤ Δh ≤ 0.01 mm). With this design, by controlling the difference between depths of two adjacent score grooves 2111, the processing difficulty is further reduced and the stability of the burst pressure of the explosion-proof score 211 is improved. Optionally, Δh may be -0.02 mm, -0.015 mm, -0.01 mm, -0.005 mm, 0 mm, 0.005 mm, or 0.01 mm, etc.

Specifically, as shown in FIG. 4, a wall of the score groove 2111 is a first sloped surface 2112, and the first sloped surface 2112 extends from a bottom of the score groove 2111 toward an opening of the score groove 2111 and is inclined away from a center line O1 of the explosion-proof score 211. Therefore, the wall of the score groove 2111 may serve as a transition surface, which may reduce stress concentration and also reduce the difficulty of processing. In other embodiments, the bottom and the wall of the score groove 2111 are arranged to be perpendicular to each other.

For example, from an inside to an outside of the case, lengths of all score grooves are gradually increased. Therefore, the explosion-proof score 211 can be arranged in steps along the length direction thereof, which is beneficial to the manufacturing of the explosion-proof score 211. In the embodiment, widths of the score grooves are equal to each other. In other embodiments, widths of all score grooves may be different from each other.

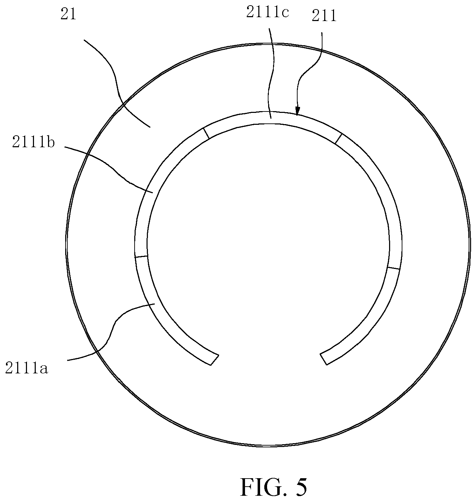

In an optional embodiment, as shown in FIGS. 4 and 5, the explosion-proof score 211 is provided with three score grooves 2111, and the three score grooves 2111 are a first score groove 2111a, a second score groove 2111b and a third score groove 2111c. The second score groove 2111b is at a recessed bottom of the first score groove 2111a, and the third score groove 2111c is at a recessed bottom of the second score groove 2111b. Three score grooves 2111 with different depths are etched, so that three thinned portions with different thinness are formed on the case. As a result, multi-stage break may occur when the pressure inside the case is too high.

When the battery is under extreme conditions such as high temperature, being over-charged and short-circuited, a large amount of hot gas is generated inside the first shell 2. Since a strength of the explosion-proof score 211 in the first shell 2 is relatively weak, when the pressure inside the first shell 2 is relatively high, the explosion-proof score 211 will be firstly broken to form a pressure relief channel, so that electrolyte, high-pressure gas and other substances inside the first shell 2 are released from the broken position. As a result, the pressure inside the first shell 2 is avoided from further increasing to cause the battery explosion. Therefore, the explosion-proof score 211 play a role of safety and explosion proof.

For example, the bottom of the third score groove 2111c is the thinnest, which is a first weak portion, a portion between the wall of the second score groove 2111b and the wall of the third score groove 2111c is a second weak portion, and a portion between the wall of the first score groove 2111a and the wall of the second score groove 2111b is a third weak portion. When the pressure inside the first shell 2 rises to a set value, the first weak region is firstly broken to exhaust gas. When the first weak region cannot meet demands, the pressure inside the first shell 2 continues to rise, and the second weak region and the third weak region will be broken to exhaust gas in sequence, thereby improving the gas exhausting efficiency.

Further, as shown in FIG. 3, extension directions of the lengths of the first score groove 2111a, the second score groove 2111b and the third score groove 2111c are the same. The length of the first score groove 2111a is L1, the length of the second score groove 2111b is L2, the length of the third score groove 2111c is L3, and L1 > L2 > L3. In this way, the three score grooves 2111 have gradient changes in the length direction. That is, the depths of the three score grooves 2111 in the length direction are changed, which can improve the stability of pressure relief.

Of course, in other embodiments, two, four or other numbers of score grooves 2111 may also be provided.

In another embodiment, the three score grooves 2111 have gradient changes in a width direction. That is, widths of all score grooves are different from each other. Alternatively, the three score grooves 2111 have gradient changes in the width direction and in the length direction.

Of course, in other embodiments, the number of the score grooves 2111 may also be set to two, four or another number, which is not limited to the embodiments above.

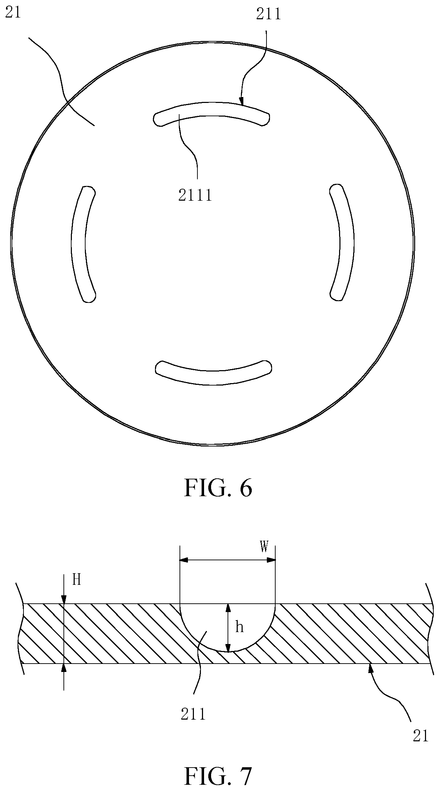

In another embodiment, as shown in FIGS. 6 and 7, a cross section of the explosion-proof score 211 is arc-shaped. With this design, the thinness of the explosion-proof score 211 gradually changes along a depth direction thereof. Therefore, under extreme conditions such as high pressure, the explosion-proof score 211 may also be broken to form pressure relief channels having different areas according to a level of the pressure, so as to effectively relieve pressure. In the embodiment, as shown in FIG. 1, the explosion-proof score 211 is arranged in an outer sidewall of the first shell 2, and the inner sidewall of the first shell 2 corresponding to the explosion-proof score 211 is of a planar structure. Thus, the inner sidewall of the first shell 2 is not affected by the explosion-proof score 211, which facilitates better installation of the jelly roll 1. In addition, the space outside the first shell 2 is relatively large, which facilitates the manufacturing of the explosion-proof score 211. Of course, in other embodiments, the explosion-proof score 211 may be arranged in the inner sidewall of the first shell 2.

In an optional embodiment, as shown in FIG. 4, the depth of the explosion-proof score 211 is h, and h is in a range of 0.13 mm to 0.155 mm (i.e., 0.13 mm ≤ h ≤ 0.155 mm). The battery has a better explosion-proof performance when the depth of the explosion-proof score 211 is in this range. Optionally, the depth h of the explosion-proof score 211 may be 0.13 mm, 0.135 mm, 0.14 mm, 0.145 mm, 0.15 mm or 0.155 mm, etc.

In an optional embodiment, as shown in FIG. 7, the width of the explosion-proof score 211 is W, and W is in a range of 0.1 mm to 0.5 mm (i.e., 0.1 mm ≤ W ≤ 0.5 mm). The battery has a better explosion-proof performance when the width of the explosion-proof score 211 is in this range. Optionally, the width W of the explosion-proof score 211 may be in a range of 0.1 mm to 0.3 mm. For example, the width W of the explosion-proof score 211 may be 0.1 mm, 0.11 mm, 0.12 mm, 0.13 mm, 0.14 mm, 0.15 mm, 0.16 mm, 0.17 mm, 0.18 mm, 0.19 mm, 0.2 mm, 0.21 mm, 0.22 mm, 0.23 mm, 0.24 mm, 0.25 mm, 0.26 mm, 0.27 mm, 0.28 mm, 0.29 mm or 0.3 mm, etc.

Optionally, as shown in FIG. 3, the explosion-proof score 211 is in a shape of a straight line. In other words, the explosion-proof score 211 is in a shape of "-". In this way, the explosion-proof score 211 has a simple shape and is easy to be manufactured.

Optionally, as shown in FIG. 5, the explosion-proof score 211 is in a shape of a curve. In this shape, the length and area of the explosion-proof score 211 may be increased in a limited space of the first shell 2, thereby increasing the explosion-proof effect and improving the safety performance of the battery. Specifically, the explosion-proof score 211 may be S-shaped, C-shaped, Z-shaped, annular or in other shape with a certain curvature; or the explosion-proof score 211 may also be in other irregular shape.

Optionally, one or more explosion-proof scores 211 may be provided in the first shell 2, and the one or more explosion-proof scores 211 may be strip-shaped or dot-shaped. In the case where the explosion-proof scores 211 are dot-shaped, the explosion-proof scores 211 are arranged in an array.

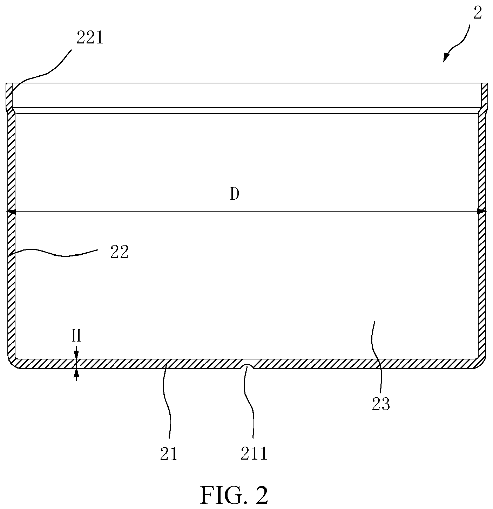

In yet another embodiment, as shown in FIGS. 1 and 2, the first shell 2 includes a base plate 21 and a first enclosing plate 22 surrounding the base plate 21, the base plate 21 and the first enclosing plate 22 are connected to form the accommodation cavity 23, and the explosion-proof score 211 is arranged in the base plate 21. During the service of the battery, the base plate 21 is generally located at a bottom of the battery, and thus the explosion-proof score 211 is difficult to be seen, thereby improving the aesthetics of the battery. In the embodiment, the first shell 2 has only one opening at an end of the accommodation cavity 23. In other embodiments, the first shell 2 is provided with openings at both ends of the accommodation cavity 23, and the openings each are blocked by a second shell 3.

Specifically, as shown in FIG. 6, the explosion-proof scores 211 are arc-shaped, and the explosion-proof scores 211 are evenly distributed around a center of the base plate 21. Thus, in an aspect, the explosion-proof performance of the battery may be improved, and in another aspect, the aesthetics of the battery may be improved. Optionally, the number of the score grooves 2111 may be set to two, three, four or other number, which is not limited to the embodiment.

In yet another optional embodiment, as shown in FIG. 2, the first shell includes a base plate 21 and a first enclosing plate 22 surrounding the base plate 21, the base plate 21 and the first enclosing plate 22 are connected to form the accommodation cavity 23, and the explosion-proof score 211 is arranged in the first enclosing plate 22. The location of the explosion-proof score 211 may be set according to actual needs, which is not specifically limited herein.

Optionally, as shown in FIG. 2, the wall thickness of the case is H, and H is in a range of 0.17 mm to 0.19 mm (i.e., 0.17 mm ≤ H ≤ 0.19 mm). Optionally, the wall thickness H of the case may be 0.17 mm, 0.171 mm, 0.172 mm, 0.173 mm, 0.174 mm, 0.175 mm, 0.176 mm, 0.177 mm, 0.178 mm, 0.179 mm, 0.18 mm, 0.181 mm, 0.182 mm, 0.183 mm, 0.184 mm, 0.185 mm, 0.186 mm, 0.187 mm, 0.188 mm, 0.189 mm or 0.19 mm, etc.

Optionally, the burst pressure of the explosion-proof score 211 is P, and P is in a range of 1.6 Mpa to 5 Mpa (i.e., 1.6 Mpa ≤ P ≤ 5 Mpa). Optionally, the burst pressure P of the explosion-proof score 211 may be 1.6 Mpa, 1.8 Mpa, 2 Mpa, 2.2 Mpa, 2.4 Mpa, 2.5 Mpa, 2.6 Mpa, 2.8 Mpa, 3 Mpa, 3.2 Mpa, 3.4 Mpa, 3.5 Mpa, 3.6 Mpa, 3.8 Mpa, 4 Mpa, 4.2 Mpa, 4.4 Mpa, 4.5 Mpa, 4.6 Mpa, 4.7 Mpa, 4.8 Mpa or 5Mpa.

Optionally, the diameter of the case is D, and D is in a range of 5.5 mm to 15 mm (i.e., 5.5 mm ≤ D ≤15 mm). Optionally, the diameter D of the case may be 5.5 mm, 6 mm, 6.5 mm, 7 mm, 7.5 mm, 8 mm, 8.5 mm, 9 mm, 9.5 mm, 10 mm, 10.5 mm, 11 mm, 11.5 mm, 12 mm, 12.5 mm, 13 mm, 13.5 mm, 14 mm, 14.5 mm or 15 mm, etc.

In an optional embodiment, as shown in FIGS. 2 to 4, the explosion-proof score 211 is linear, and the explosion-proof score 211 is located at the middle part of the base plate 21. A wall thickness H of the base plate 21 is in a range of 0.17 mm to 0.19 mm, the depth h of the explosion-proof score 211 is in a range of 0.13 mm to 0.15 mm, the width W of the explosion-proof score 211 is in a range of 0.2 mm to 0.3 mm, the burst pressure P is in a range of 1.6 Mpa to 2.6 Mpa, and the diameter D of the case is in the range of 5.5 mm to 15 mm (i.e., 5.5 mm ≤ D ≤15 mm).

In another optional embodiment, as shown in FIGS. 2, 4 and 5, the explosion-proof score 211 is arc-shaped, an arc angle of the explosion-proof score 211 is 120 degrees, and the explosion-proof score 211 is located at the middle part of the base plate 21. The wall thickness H of the base plate 21 is in the range of 0.17 mm to 0.19 mm, the depth h of the explosion-proof score 211 is in a range of 0.135 mm to 0.155 mm, the width W of the explosion-proof score 211 is in a range of 0.1 mm to 0.5 mm, the burst pressure P is in a range of 2.6 Mpa to 5 Mpa, and the diameter D of the case is in the range of 5.5 mm to 15 mm (i.e., 5.5 mm ≤ D ≤15 mm).

It can be seen from the data in the above embodiments that the depth and width of the explosion-proof score 211 are determined by the thickness D of the case and the burst pressure.

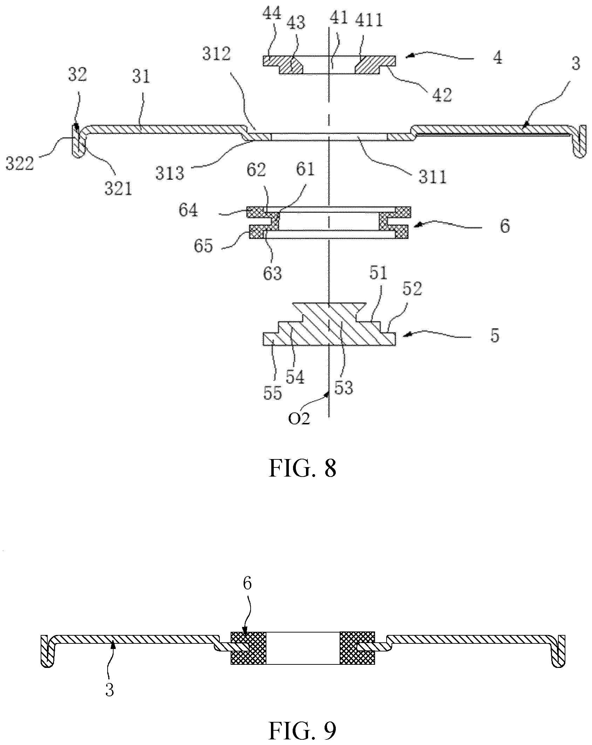

In an embodiment, as shown in FIGS. 1 and 8, the battery further includes a fixing block 4, a pole 5 and a sealing member 6. The second shell 3 is provided with a first mounting hole 311 penetrating therethrough. The fixing block 4 is disposed on a side of the second shell 3 away from the jelly roll 1, and the fixing block 4 includes a first body 43. An outer sidewall of the first body 43 is provided with a first projecting ring 44, and a thickness of the first body 43 is greater than a thickness of the first projecting ring 44; and the first body 43 is provided with a second mounting hole 41 corresponding to the first mounting hole 311. The pole 5 is disposed on a side of the second shell 3 facing the jelly roll 1, and the pole 5 partially passes through the first mounting hole 311 and the second mounting hole 41 to be riveted to the first body 43. An outer sidewall of the pole 5 is provided with a first step surface 51 and a second step surface 52 that are arranged at an interval, and a surface of the first body 43 facing the second shell 3 abuts against the first step surface 51. The sealing member 6 is partially sandwiched between a hole wall of the first mounting hole 311 and the outer sidewall of the pole 5, and the first projecting ring 44 and the second step surface 52 abut against two opposite surfaces of the sealing member, respectively.

For the battery in the embodiment, the pole 5 is riveted to the second mounting hole 41 of the fixing block 4, and the first step surface 51 of the pole 5 abuts against the first body 43 of the fixing block 4, thereby ensuring the connection stability between the pole 5 and the fixing block 4. In the riveting process, since the thickness of the first body 43 is greater than that of the first projecting ring 44, the strength of the fixing block 4 at the riveting position is high, which may prevent the fixing block 4 from being deformed in the riveting process. As a result, the first projecting ring 44 and the second step surface 52 of the pole 5 squeeze the sealing member 6 in a direction, and the hole wall of the first mounting hole 311 of the second shell 3 and the pole 5 squeeze the sealing member 6 in another direction. Therefore, the sealing of the battery is improved by the sealing member 6 squeezed in two directions at an angle. In addition, the explosion-proof score is disposed on a hole wall of the first shell 2, and the explosion-proof score 211 is equivalent to a locally thinned portion of the first shell 2 and may be used for gas exhausting and pressure relief when the pressure inside the first shell 2 is too high to avoid the battery from exploding, and thus the battery has a relatively high safety. With this design, there is no need to provide a through hole in the first shell 2 for installing an explosion-proof valve, which further improves the sealing of the battery.

It will be understood that, during the riveting process of the pole 5 and the fixing block 4, the end of the pole 5 needs to be squeezed by a riveting equipment, and thus the end of the pole 5 is deformed to form a structure fitting with the second mounting hole 41 for fixing. Therefore, during the riveting process, the fixing block 4 will also be subjected to a certain force. In a case where the fixing block 4 is too thin, the fixing block 4 will be deformed due to insufficient strength. In a case where the fixing block 4 is too thick, the weight and volume of the battery will be increased, which is not in line with the lightweight design. In the embodiment, the fixing block 4 is designed to be of a structure having the projecting ring, such that a step structure is formed between the first projecting ring 44 and the first body 43, and the thickness of the first body 43 is greater than that of the first projecting ring 44, thereby the strength of the first body 43 is relatively high and meets the strength requirement of the first body 43 for being riveting with the pole 5. In addition, the first projecting ring 44 is relatively thin, which may reduce the weight and volume of the fixing block 4. In addition, the step structure of the fixing block 4 cooperates with the step surface of the pole 5 to squeeze the sealing member 6, and thus the fixing block 4 and the pole 5 are compact and have a good sealing performance.

The sealing member 6 is a sealing ring, and the sealing ring is of a rotary structure. The sealing member may seal a periphery of the first mounting hole 311 with a good sealing effect. In the embodiment, the first projecting ring 44 and the first step surface 51 squeeze the sealing member 6 in an axial direction of the sealing member 6, and the hole wall of the first mounting hole 311 and the outer sidewall of the pole 5 squeeze the sealing member 6 in a radial direction of the sealing member 6, and thus the sealing member 6 is squeezed by squeezing forces in two perpendicular directions, thereby further improving the sealing performance of the sealing member 6. In other embodiments, the sealing member 6 may be in other shape, such as a square or an irregular shape.

Optionally, as shown in FIG. 2, the first shell 2 may be made of steel, aluminum, copper or other material(s). The first shell 2 may serve as an outermost layer of a bare cell, and the first shell 2 directly contacts the jelly roll 1. The shape of the first shell 2 may be a cylinder, a triangular prism, a quadrangular prism or other shape, and the shape of the first shell 2 is not limited to the embodiment.

Optionally, as shown in FIG. 1, the jelly roll 1 includes a positive electrode sheet, a negative electrode sheet, a diaphragm and tabs. In the embodiment, the jelly roll 1 is a wound jelly roll 1, which is abbreviated as a wound core. In a manufacturing process of the jelly roll 1, the positive electrode sheet, the diaphragm and the negative electrode sheet are sequentially stacked and then wound together to form the wound core. In other embodiments, the jelly roll 1 may be a laminated jelly roll formed by sequentially stacked positive electrode sheets, diaphragms and negative electrode sheets, or have other jelly roll structure familiar to those skilled in the art.

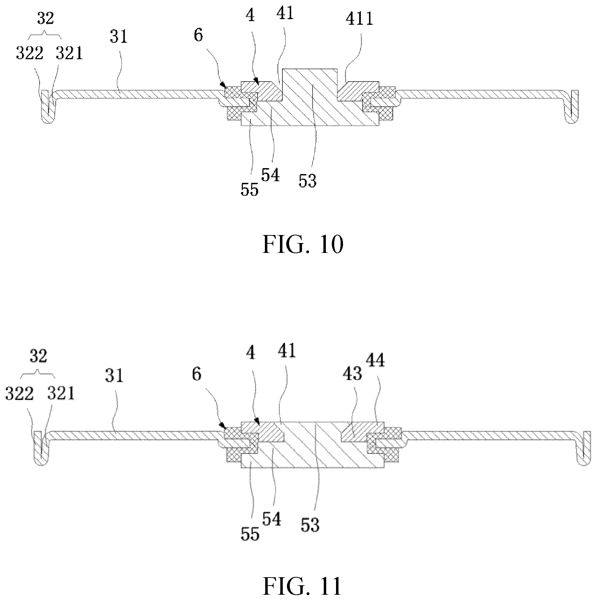

In an embodiment, as shown in FIGS. 8 and 10, at least a portion of the hole wall of the second mounting hole 41 is a second sloped surface 411, and the second sloped surface 411 extends from an end of the second mounting hole 41 adjacent to the second step surface 52 to another end of the second mounting hole 41 away from the second step surface 52 and is inclined away from a center line O2 of the second mounting hole 41. Therefore, with this design, the second mounting hole 41 has an outwardly expanding second sloped surface 411, which is beneficial to rivet connection between the pole 5 and the fixing block 4. As a result, the connection between the pole 5 and the fixing block 4 is improved.

It will be understood that, the portion of the hole wall of the second mounting hole 41 being the second sloped surface 411 means that part of the hole wall is the second sloped surface 411, and the portion of the hole wall may be a straight surface, a curved surface, or a surface of other shape. Of course, the hole wall of the second mounting holes 41 may be the second sloped surface 411.

Specifically, as shown in FIGS. 8 and 10, at least part of the second mounting hole 41 is a tapered hole with a big end and a small end, and the big end is located at an end surface of the first body 43 away from the second step surface 52. In other words, the tapered hole is formed by the second sloped surface 411. After the riveting process of the pole 5 and the fixing block 4, the end of the pole 5 forms a dovetail portion fitting with the tapered hole, and the dovetail portion is matched and fixed with the tapered hole, so that the stability between the pole 5 and the fixing block 4 is relatively high. In the embodiment, the second mounting hole 41 includes the tapered hole and a straight hole that are communicated with each other, and the tapered hole is located at an end of the first body 43 away from the jelly roll 1. It will be noted that, for the big end and the small end of the tapered hole, a diameter of the big end is larger than a diameter of the small end.

In other embodiments, the end of the first body 43 away from the jelly roll 1 is provided with a countersunk groove, and the second mounting hole 41 penetrates through a bottom of the countersunk groove. In the riveting process, the end of the pole 5 may be squeezed to have a shape fitting with the countersunk groove.

In another embodiment, as shown in FIG. 8, the pole 5 includes a second body 53, and an outer sidewall of the second body 53 is provided with a second projecting ring 54. The second body 53 passes through the first mounting hole 311 and is riveted to the second mounting hole 41. An end surface of the second projecting ring 54 facing the fixing block 4 is the first step surface 51; and an outer sidewall of the second projecting ring 54 is provided with a third projecting ring 55, and an end surface of the second projecting ring 54 facing the fixing block 4 is the second step surface 52. It will be understood that the pole 5 is also a rotary structure. A diameter of the first body 43 is less than a diameter of the second projecting ring 54, and the diameter of the second projecting ring 54 is less than a diameter of the third projecting ring 55, so that a cross section of the pole 5 is in an inverted T shape. The pole 5, the sealing member 6 and the fixing block 4 are mutually matched and fixed, and the structures are compact. A side surface of the first projecting ring 44 facing the second shell 3 is a third step surface 42, and the third step surface 42 and the second step surface 52 squeeze the sealing member 6 in the axial direction of the sealing member 6. Optionally, the second body 53, the second projecting ring 54 and the third projecting ring 55 may be integrally formed by a cold heading process.

The riveting process of the pole 5 and the fixing block 4 is described as follows.

As shown in FIG. 10, before the riveting process, the second body 53 of the pole 5 is cylindrical, and the second body 53 is inserted into the second mounting hole 41. Then, an end of the second body 53 is squeezed by the riveting equipment to be deformed. As a result, as shown in FIG. 11, the dovetail portion is formed to be fitted with the tapered hole.

In another embodiment, as shown in FIG. 8, the cross section of the sealing member 6 is U-shaped, and the sealing member 6 includes at least a first sealing portion 61, a second sealing portion 62 and a third sealing portion 63. The second sealing portion 62 and the third sealing portion 63 are arranged at two opposite ends of the first sealing portion 61, respectively. The first sealing portion 61 is sandwiched between the hole wall of the first mounting hole 311 and the outer sidewall of the pole 5, so that the sealing member 6 is radially squeezed. The second sealing portion 62 is sandwiched between the first projecting ring 44 and the second shell 3, and the third sealing portion 63 is sandwiched between the second step surface 52 and the second shell 3, so that the sealing member 6 is axially squeezed. As a result, a squeezed state of the sealing member as shown in FIG. 11 is obtained. A first extension portion 64 and a second extension portion 65 are separated so that a slot is formed, and the second shell 3 is partially inserted into the slot to improve the stability between the second shell 3 and the sealing member 6.

Further, the first extension portion 64 is arranged on an end of the second sealing portion 62 away from the first sealing portion 61, and the first extension portion 64 extends away from the second shell 3; and the second extension portion 65 is arranged on an end of the third sealing portion 63 away from the first sealing portion 61, and the second extension portion 65 extends away from the second shell 3. As a result, a cross section of the sealing portion 6 is zigzaggd, and the shape of the sealing portion 6 is in the squeezed state. The first extension portion 64 abuts against an outer sidewall of the fixing block 4, and the second extension portion 65 abuts against the outer sidewall of the pole 5 to further improve the sealing of the battery.

In other embodiments, only the first extension portion 64 may be provided at the second sealing portion 62, or only the second extension portion 65 may be provided at the third sealing portion 63.

Optionally, the sealing member 6 and the second shell 3 are integrally injection molded, thereby further improving the sealing performance thereof. As shown in FIG. 9, before the sealing member 6 is squeezed by the second shell 3 and the fixing block 4, the sealing member 6 is I-shaped. As shown in FIG. 10, after the sealing member 6 is squeezed, the cross section is zigzagged.

In another embodiment, as shown in FIG. 1, the second shell 3 includes a plate body 31 and a bended structure 32 disposed at an outer periphery of the plate body 31, and the first mounting hole 311 is arranged in the plate body 31. The first shell 2 includes a base plate 21 and a first enclosing plate 22 surrounding the base plate 21, and the base plate 21 and the first enclosing plate 22

are connected to form the accommodation cavity 23; and the bended structure 32 is fixedly connected to an inner sidewall of the first enclosing plate 22. With this design, the bended structure 32 of the second shell 3 engages with the first enclosing plate 22, and thus the contacting area between the second shell 3 and the first shell 2 is increased. Thereby the second shell 3 can block the opening of the first shell 2, and thus the heat generated by laser welding can be effectively isolated such that the welding heat is avoided from affecting structures inside the battery.

Specifically, as shown in FIG. 2, an end of the first enclosing plate 22 away from the base plate 21 is provided with a flared portion 221, and the flared portion 221 is hermetically connected to the bended structure 32 to further increase the contacting area.

Specifically, as shown in FIG. 8, a side surface of the plate body 31 away from the jelly roll 1 is provided with a concave limiting groove 312, the first mounting hole 311 penetrates through a bottom of the limiting groove 312, and the fixing block 4 is arranged in the limiting groove 312. The limiting groove 312 may limit the fixing block 4 and improve the stability of the fixing block 4. The fixing block 4 partially protrudes from the side surface of the plate body 31 away from the jelly roll 1. With this design, the fixing block 4 is ensured with the sufficient thickness to have enough strength.

Specifically, as shown in FIG. 8, the bended structure 32 includes a first bended portion 321 and a second bended portion 322, the first bended portion 321 is connected to the plate body 31 and extends towards the inside of the battery, and the second bended portion 322 is connected to an end of the first bended portion 321 away from the plate body 31 and extends towards the outside of the battery. The second bended portion 322 extends along a same direction as an inner wall of the flared portion 221. Thus, the second bended portion 322 and the flared portion 221 may fully contact each other, which improves the welding quality of the second shell 3 and the first shell 2. Moreover, the first bended portion 321 and the second bended portion 322 form a double-layer barrier, which further reduces the influence of welding on the jelly roll 1.

Specifically, a surface of the bended structure 32 away from the base plate 21 is arranged flush with the side surface of the plate body 31 away from the base plate 21. More specifically, a surface of the second bended portion 322 away from the base plate 21 is flush with both the surface of the bended structure 32 away from the base plate 21 and the side surface of the plate body 31 away from the base plate 21, so that a certain height difference exists between the end surface of the second bended portion 322 and the end surface of the fixing block 4. As a result, the risk of short circuit caused by an overlap of conductors during the production and service of the battery is reduced, thereby improving the safety of the battery.

Specifically, as shown in FIG. 1, the jelly roll 1 is provided with the first tab 11, the bended structure 32 is welded with the first enclosing plate, and the first tab 11 is sandwiched between the bended structure 32 and the inner sidewall of the first enclosing plate 22, so that there is no need for the first tab 11 being fixed by an ejector pin, which reduces a space occupied by the ejector pin in the welding process, enables the jelly roll 1 to be made relatively large, and improves the energy density of the battery. In addition, the first tab 11 extends from the jelly roll 1 to a position between the first shell 2 and the bended structure 32, and there is no need to arrange the first tab 11 in the first shell 2, thereby further improving the energy density of the battery.

It will be understood that the jelly roll 1 is provided with the first tab 11 and a second tab 12, one of which is a positive tab and the other one is a negative tab. The first tab 11 is welded to the first shell 2 and the second tab 12 is electrically connected to the pole 5.

In another embodiment, the second shell 3 includes the plate body 31 and a second enclosing plate (not shown in the figures) disposed on a side of the plate body 31. The second enclosing plate is connected to the first enclosing plate 22, and the second enclosing plate surrounds the first enclosing plate 22. For example, the second enclosing plate is welded to the first enclosing plate 22, so that the second shell 3 can better cover the first shell 2. Thus, the sealing of the battery is improved.

In other embodiments, the second enclosing plate is arranged inside the first enclosing plate 22. That is, the first enclosing plate 22 surrounds the second enclosing plate, and the second enclosing plate is provided with the bended structure 32.

Specifically, as shown in FIG. 1, the battery further includes an insulating sheet 7, and the insulating sheet 7 is disposed between the jelly roll 1 and the second shell 3. The insulating sheet 7 can play an insulating role and avoid the jelly roll 1 from being directly connected to the second shell 3.

Optionally, a main material of the insulating sheet 7 is one of PP, PE, PET, PVC or another insulating material well known to those skilled in the art or a combination thereof.

In an embodiment, as shown in FIG. 8, the limiting groove 312 is integrally formed with the stamping process of the plate body, so that a projecting portion 313 is formed at a position corresponding to the limiting groove 312 on a side of the plate body adjacent to the jelly roll 1. By forming the limiting groove 312 with the stamping process, thickness uniformity across the second shell 3 is ensured, and the projecting portion 313 formed by stamping reinforces the second shell 3.

Optionally, as shown in FIG. 8, the insulating sheet 7 is an insulating ring, and the insulating ring is located between the projecting portion 313 and the bended structure.

In other embodiments, the insulating sheet 7 may also be in a shape of a square, a circle or other shape, which is not limited to the embodiment.

As shown in FIGS. 1 to 11, the production process of the battery includes, for example, the following steps.

In S10, the second shell 3, the pole 5, the fixing block 4 and other components are manufactured.

In S20, the injection molded sealing member 6 shown in FIG. 3 is formed around the hole wall of the first mounting hole 311 of the second shell 3.

In S30, the pole 5 is riveted to the fixing block 4, so that a cover assembly is formed.

In S40, the insulating sheet 7 is bonded to the inside of the second shell 3.

In S50, the explosion-proof score 211 is made in the outer surface of the first shell 2 by laser engraving.

In S60, the jelly roll 1 is provided and put into the first shell 2, the first tab 11 of the jelly roll 1 is sandwiched between the bended structure 32 of the second shell 3 and the flared portion 221 of the first shell 2, and the second tab 12 of the jelly roll 1 is connected to the pole 5.

In S70, the electrolyte is injected into the first shell 2.

In S80, the second shell 3 is covered by a molding die, so that the second shell 3 is embedded in the flared portion 221 of the first shell 2, and then a portion of the first tab 11 exposed from the first shell 2 is cut off.

In S90, the first shell 2 and the second shell 3 are sealed and welded by circumferential laser welding along the flared portion 221 to form the battery provided in the embodiment of the present disclosure.

The technical principles of the present disclosure have been described above in combination with specific embodiments. These description is only for explaining the principles of the present disclosure, and should not be interpreted as limiting the protection scope of the present disclosure in any way. Based on the explanation herein, those skilled in the art can think of other specific embodiments of the disclosure without creative effort, which will fall within the protection scope of the present disclosure.

## Claims

1. A battery comprising a jelly roll (1) and a case, wherein the case comprises a first shell (2) and a second shell (3); the first shell (2) has an accommodation cavity (23) therein, the first shell (2) is provided with an opening communicated with the accommodation cavity (23), the jelly roll (1) is disposed in the accommodation cavity (23), and the second shell (3) blocks the opening; an explosion-proof score (211) is provided in the first shell (2) and/or the second shell (3), a burst pressure of the explosion-proof score (211) is P, a tensile strength of a material of the case is $\sigma_b$, a diameter of the first shell (2) is D, a wall thickness of the case is H, and a depth of the explosion-proof score (211) is h; wherein

in a case where the explosion-proof score (211)

$$P = \frac{(H-h)\ \sigma_b}{D-0.6(H-h)}$$

is linear, ; or

in a case where the explosion-proof score (211)

$$P = \frac{2(H-h)\ \sigma_b}{D-1.2(H-h)}$$

is curved, .

2. The battery according to claim 1, wherein the explosion-proof score (211) comprises at least two score grooves (2111), all the score grooves (2111) are arranged in steps along a depth direction of the explosion-proof score (211), and a sum of depths of all the score grooves (2111) is equal to the depth of the explosion-proof score (211).

3. The battery according to claim 2, wherein in the depth direction of the explosion-proof score (211), a difference between depths of any two of the score grooves (2111) is $\Delta h$, and -0.02 mm $\leq \Delta h \leq$ 0.01 mm.

4. The battery according to claim 2, wherein a wall of each score groove (2111) is a first sloped surface (2112), and the first sloped surface (2112) extends from a bottom of the score groove (2111) towards an opening of the score groove (2111) and is inclined away from a center line (O1) of the explosion-proof score (211); and/or
from an inside to an outside of the case, lengths of all the score grooves (2111) are gradually increased.

5. The battery according to claim 1, wherein the depth of the explosion-proof score (211) satisfies 0.13 mm $\leq$ h $\leq$ 0.155 mm; and/or

the width of the explosion-proof score (211) satisfies 0.1 mm $\leq$ W $\leq$ 0.5 mm; and/or
the burst pressure of the explosion-proof score (211) satisfies 1.6 MPa $\leq$ P $\leq$ 5 MPa; and/or
the wall thickness H of the case satisfies 0.17 mm $\leq$ H $\leq$ 0.19 mm; and/or
the diameter D of the first shell satisfies 5.5 mm $\leq$ D $\leq$ 15 mm.

6. The battery according to claim 1, wherein a cross section of the explosion-proof score (211) is arc-shaped; and/or
the explosion-proof score (211) is disposed on an outer sidewall of the first shell (2), and a portion of an inner sidewall of the first shell (2) corresponding to the explosion-proof score (211) is of a planar structure.

7. The battery according to claim 1, wherein the first shell (2) comprises a base plate (21) and a first enclosing plate (22) surrounding the base plate (21), the base plate (21) and the first enclosing plate (22) are connected to form the accommodation cavity (23), and the explosion-proof score (211) is arranged in the base plate (21); and/or
the first shell (2) comprises a base plate (21) and a first enclosing plate (22) surrounding the base plate (21), the base plate (21) and the first enclosing plate (22) are connected to form the accommodation cavity (23), and the explosion-proof score (211) is arranged in the first enclosing plate (22).

8. The battery according to any one of claims 1 to 7, further comprising: a fixing block (4), a pole (5) and a sealing member (6), wherein

the second shell (3) is provided with a first mounting hole (311) penetrating therethrough;
the fixing block (4) is disposed on a side of the second shell (3) away from the jelly roll (1), and the fixing block (4) comprises a first body (43); an outer sidewall of the first body (43) is provided with a first projecting ring (44), and a thickness of the first body (43) is greater than a thickness of the first projecting ring (44); and the first body (43) is provided with a second mounting hole (41) corresponding to the first mounting hole (311);
the pole (4) is disposed on a side of the second shell (3) facing the jelly roll (1), and the pole (4) partially passes through the first mounting hole (311) and the second mounting hole (41) to be riveted to the first body (43); an outer sidewall of the pole (5) is provided with a first step surface (51) and a second step surface (52) that are arranged at an interval, and a surface of the first body (43) facing the second shell (3) abuts against the first step surface (51); and
the sealing member (6) is partially sandwiched between a hole wall of the first mounting hole (311) and the outer sidewall of the pole (5), and the first projecting ring (44) and the second step surface (52) abut against two opposite surfaces of the sealing member (6), respectively.

9. The battery according to claim 8, wherein at least a portion of a hole wall of the second mounting hole (41) is a second sloped surface (411), and the second sloped surface (411) extends from an end of the second mounting hole (41) adjacent to the second step surface (52) to another end of the second mounting hole (41) away from the second step surface (52) and is inclined away from a center line (O2) of the second mounting hole (41); or
at least the portion of the hole wall of the second mounting hole (41) is the second sloped surface (411), and the second sloped surface (411) extends from the end of the second mounting hole (41) adjacent to the second step surface (52) to the another end of the second mounting hole (41) away from the second step surface (52) and is inclined away from the center line (O2) of the second mounting hole (41); at least part of the second mounting hole (41) is a tapered hole with a big end and a small end, and the big end is located at an end surface of the first body (43) away from the second step surface (52).

10. The battery according to claim 8, wherein the pole (5) comprises a second body (53), an outer sidewall of the second body (53) is provided with a second projecting ring (54), an end surface of the second projecting ring (54) facing the fixing block (4) is the first step surface (51); an outer sidewall of the second projecting ring (54) is provided with a third projecting ring (55), and an end surface of the second projecting ring (54) facing the fixing block (4) is the second step surface (52).

11. The battery according to claim 8, wherein the sealing member (6) comprises at least a first sealing portion (61), a second sealing portion (62) and a third sealing portion (63), the second sealing portion (62) and the third sealing portion (63) are arranged at two opposite ends of the first sealing portion (61), respectively; the first sealing portion (61) is sandwiched between the hole wall of the first mounting hole (311) and the outer sidewall of the pole (5), the second sealing portion (62) is sandwiched between the first projecting ring (44) and the second shell (3), and the third sealing portion (63) is sandwiched between the second step surface (52) and the second shell (3).

12. The battery according to claim 11, wherein an end of the second sealing portion (62) away from the first sealing portion (61) is provided with a first extension portion (64), the first extension portion (64) extends away from the second shell (3), and the first extension portion (64) abuts against an outer sidewall of the fixing block (4); and/or
an end of the third sealing portion (63) away from the first sealing portion (61) is provided with a second extension portion (65), the second extension portion (65) extends away from the second shell (3), and the second extension portion (65) abuts against the outer sidewall of the pole (5).

13. The battery according to claim 8, wherein the second shell (3) comprises a plate body (31) and a bended structure (32) disposed at an outer periphery of the plate body (31), the first mounting hole (311) is arranged in the plate body (31); the first shell (2) comprises a base plate (21) and a first enclosing plate (22) surrounding the base plate (21), and the base plate (21) and the first enclosing plate (22) are connected to form the accommodation cavity (23); and the bended structure (32) is fixedly connected to an inner sidewall of the first enclosing plate (22).

14. The battery according to claim 13, wherein a side surface of the plate body (31) away from the jelly roll (1) is provided with a concave limiting groove (312), the first mounting hole (311) penetrates through a bottom of the limiting groove (312), and the fixing block (4) is arranged in the limiting groove (312), wherein the fixing block (4) partially protrudes from the side surface of the plate body (31) away from the jelly roll (1); or
the side surface of the plate body (31) away from the jelly roll (1) is provided with the concave limiting groove (312), the first mounting hole (311) penetrates through the bottom of the limiting groove (312), and the fixing block (4) is arranged in the limiting groove (312), wherein the fixing block (4) partially protrudes from the side surface of the plate body (31) away from the jelly roll (1), and an end surface of the bended structure (32) away from the base plate (21) is arranged flush with a side surface of the plate body (31) away from the base plate (21).

15. The battery according to claim 13, wherein the jelly roll (1) is provided with a first tab (11), the bended structure (32) is welded with the first enclosing plate (22), and the first tab (11) is sandwiched between the bended structure (32) and the inner sidewall of the first enclosing plate (22).

FIG. 1

FIG. 2

21

211

L1

D

W

2111a   2111b   2111c   2111b   2111a

FIG. 3

L1

L2

L3

H

2112

h

2111a   2111b   O1   2111c

21

FIG. 4

FIG. 5

y

FIG. 6

FIG. 7

FIG. 8

FIG. 9

FIG. 10

FIG. 11

Europäisches
Patentamt

European
Patent Office

Office européen
des brevets

# EUROPEAN SEARCH REPORT

**Application Number**

EP 24 16 6418

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 210 245 599 U (CHANGZHOU WEIZHOU ELECTRONIC TECH CO LTD) 3 April 2020 (2020-04-03) | 1-7 | INV. H01M50/107 H01M50/133 |
| Y | * the whole document * | 8-15 | H01M50/143 H01M50/179 |
| X | EP 4 096 009 A1 (CONTEMPORARY AMPEREX TECHNOLOGY CO LTD [CN]) 30 November 2022 (2022-11-30) | 1,2 | H01M50/188 H01M50/342 H01M50/559 |
| A | * claims 1-17 * * figures 10, 11, 13 * * paragraphs [0055], [0093] - paragraph [0095] * | 3-15 | |
| Y | WO 2022/198676 A1 (NINGDE AMPEREX TECHNOLOGY LTD [CN]) 29 September 2022 (2022-09-29) | 8-15 | |
| A | * figures 3, 4 * & EP 4 318 787 A1 (NINGDE AMPEREX TECHNOLOGY LTD [CN]) 7 February 2024 (2024-02-07) * claims 1-12 * * paragraphs [0004], [0029], [0049] - [0056], [0066] - [0078], [0081] * | 1-7 | **TECHNICAL FIELDS SEARCHED (IPC)** H01M |
| Y | CN 115 966 852 A (HUIZHOU EVE ENERGY CO LTD) 14 April 2023 (2023-04-14) | 13-15 | |
| A | * figures 1, 4 * * paragraphs [0023], [0035] - paragraph [0055] * | 1-12 | |
| A | CN 212 434 721 U (SUNWODA ELECTRIC VEHICLE CELL CO LTD) 29 January 2021 (2021-01-29) * the whole document * | 1-15 | |

The present search report has been drawn up for all claims

| Place of search | Date of completion of the search | Examiner |
|---|---|---|
| The Hague | 12 December 2024 | Di Berardino, F |

EPO FORM 1503 03.82 (P04C01)

# EP 4 510 321 A1

## ANNEX TO THE EUROPEAN SEARCH REPORT
## ON EUROPEAN PATENT APPLICATION NO.

EP 24 16 6418

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2024

| Patent document cited in search report | | Publication date | Patent family member(s) | | Publication date |
|---|---|---|---|---|---|
| CN 210245599 | U | 03-04-2020 | NONE | | |
| EP 4096009 | A1 | 30-11-2022 | CN | 115210950 A | 18-10-2022 |
| | | | EP | 4096009 A1 | 30-11-2022 |
| | | | US | 2022367968 A1 | 17-11-2022 |
| | | | WO | 2022170495 A1 | 18-08-2022 |
| WO 2022198676 | A1 | 29-09-2022 | CN | 114175371 A | 11-03-2022 |
| | | | EP | 4318787 A1 | 07-02-2024 |
| | | | US | 2024014525 A1 | 11-01-2024 |
| | | | WO | 2022198676 A1 | 29-09-2022 |
| CN 115966852 | A | 14-04-2023 | NONE | | |
| CN 212434721 | U | 29-01-2021 | NONE | | |

EPO FORM P0459

For more details about this annex : see Official Journal of the European Patent Office, No. 12/82